# EUROPEAN PATENT SPECIFICATION

(11) **EP 3 904 118 B1**
(45) Date of publication and mention of the grant of the patent: **12.02.2025**
(21) Application number: 21169659.6
(22) Date of filing: 21.04.2021
(51) Int. Cl.: B60C 9/12, B60C 19/00

(54) **PNEUMATIC TIRE**
LUFTREIFEN
PNEUMATIQUE

(30) Priority: 27.04.2020 JP 2020078524
(43) Date of publication of application: 03.11.2021
(73) Proprietor: Sumitomo Rubber Industries, Ltd., Kobe-shi, Hyogo-ken 651-0072 (JP)
(72) Inventor: SATO, Takuya, Kobe-shi, 651-0072 (JP); YUKAWA, Naoki, Kobe-shi, 651-0072 (JP); MATSUNAMI, Sho, Kobe-shi, 651-0072 (JP)
(74) Representative: Manitz Finsterwald Patent- und Rechtsanwaltspartnerschaft mbB

(56) References cited:
- EP-A1- 2 017 092
- EP-A1- 3 199 382
- EP-A1- 3 431 309
- EP-A1- 3 581 399
- JP-A- 2017 065 673
- US-A1- 2017 015 146

## Description

### BACKGROUND OF THE INVENTION

### Field of the Invention

The present invention relates to a pneumatic tire having improved puncture sealing performance.

### Description of the Background Art

Japanese Laid-Open Patent Publication No. 2017-65673 proposes a pneumatic tire that has both puncture sealing performance and road noise reducing performance. The pneumatic tire proposed therein has a puncture-preventive sealant layer that is made of a sealant material and is provided inward of the inner liner in the tire radial direction, and a sound absorbing layer that is made of a sponge material or the like and is provided inward of the sealant layer in the tire radial direction.

US 2017/015146 A1 discloses a tire wherein a sealant layer is present radially inside of the tread, a closed-cell foam ring with an airtight effect is placed on the inner surface of the sealant layer, and a sound-absorbing open-cell foam ring is arranged on the inner surface of the closed-cell foam ring.

EP 2 017 092 A1, EP 3 431 309 A1 and EP 3 581 399 A1 disclose tires having sound dampers made of porous material placed on the inner surface of the tire.

### SUMMARY OF THE INVENTION

However, in the above-described pneumatic tire, for example, when a puncture hole is increased due to the tire treading on a thick nail or the like, there are difficulties in sufficiently sealing the puncture hole using the sealant material, and therefore, the puncture sealing performance is not sufficiently exhibited.

The object of the present invention is to provide a pneumatic tire capable of sufficiently exhibiting puncture sealing performance even when a puncture hole is large.

A pneumatic tire according to the present invention includes: a puncture-preventive sealant layer provided on an inner peripheral surface of a tread portion; and a sound damper provided on an inner peripheral surface of the sealant layer. The sound damper includes a sponge material having closed cell foam, has an air permeability of not higher than 20 mL/cm²/s, and has a hardness of not higher than 300 N/314 cm².

In the pneumatic tire of the present invention, the sound damper preferably has a tensile strength of not less than 20 kPa.

In the pneumatic tire of the present invention, the sound damper preferably has a thickness of not less than 20 mm.

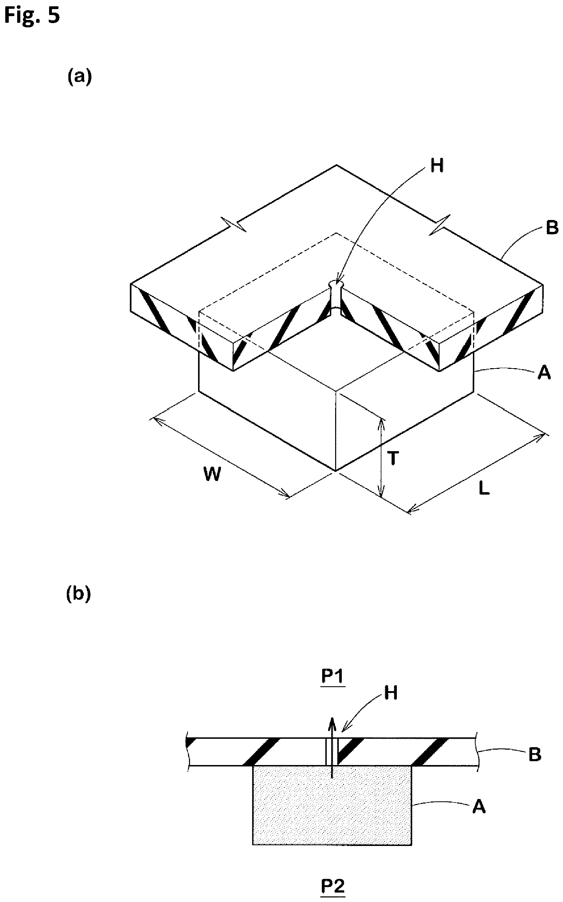

The "air permeability" of the sponge material is measured in accordance with the following measuring manner, in the present invention. As shown in FIGS. 5(a) and 5(b), a sample A of a sponge material having a width W of 60 mm, a depth L of 60 mm, and a thickness T of 30 mm is adhered to a flat plate B having a thickness of 10 mm and having a hole H with a diameter of 1 mm (corresponding to an opening area of 0.00785 cm²). At this time, the sample A is adhered to the flat plate B such that the center of a surface, of the sample A, having the width W × the depth L is located at the hole H. A pressure P2 on the sample A (sponge material) side is increased to set, as 200 kPa, the pressure difference (P2 - P1) between the pressure P2 and a pressure P1 on the flat plate B side. At this time, a flow rate (mL) per second (s) of air leaking from the hole H is measured. This flow rate is converted to a flow rate per opening area of 1.0 cm² and the obtained flow rate represents the air permeability (mL/cm²/s).

The hardness of the sponge material is measured in accordance with Method D for a hardness test specified in Section 6 of JIS-K6400-2, entitled "Flexible cellular polymeric materials - Physical properties - Part 2: Determination of hardness (indentation technique) and stress-strain characteristics in compression", in the present invention. Specifically, a sponge material is placed so as to be flat, and a round pressing plate having a diameter of 200 mm is placed on the sponge material, and pushed over a distance corresponding to 75% of the thickness (original thickness) of the sponge material under no load. Thereafter, the sponge material is restored. The plate is pushed again over a distance corresponding to 25% of the original thickness, and left in a stationary state for 20 seconds. The value of a load measured at this time is expressed in newtons (N).

The tensile strength of the sponge material is measured in accordance with Section 5, "Tensile Strength and Elongation", of JIS-K6400-5, entitled "Flexible cellular polymeric materials - Physical properties - Part 5: Determination of tensile strength, elongation at break and tear strength", in the present invention. A value measured for a No. 1 dumbbell-shaped test piece represents the tensile strength of the sponge material.

In the present invention, as described above, the sound damper includes a sponge material having closed cell foam, and has an air permeability of not higher than 20 mL/cm²/s. The air permeability is measured based on the above-described measuring manner.

In the present invention, even if a puncture hole is large and puncture sealing is not sufficiently achieved by the sealant material, since the sound damper has an air permeability of not higher than 20 mL/cm²/s and thus has excellent hermetic properties, the sound damper itself reduces air flowing through the puncture hole.

Furthermore, the sound damper having high hermetic properties acts to press the sealant material around a puncture hole. Therefore, the sealant material can be easily pushed into the puncture hole, thereby also enhancing the effect of the sealant material for sealing the puncture hole. The interaction between these effects improves the puncture sealing performance and increases the puncture sealing success rate.

### BRIEF DESCRIPTION OF THE DRAWINGS

FIG. 1 is a cross-sectional view of a pneumatic tire according to an embodiment of the present invention;
FIG. 2 is a conceptual diagram illustrating an effect of a sound damper;
FIG. 3 is a partial cross-sectional view showing a sealant material pushing effect in an exaggerated manner;
FIGS. 4(a) and 4(b) are cross sectional views showing a problem arising when the tensile strength of a sound damper is low; and
FIGS. 5(a) and 5(b) are a perspective view and a cross-sectional view, respectively, showing a manner for measuring an air permeability of a sound damper.

### DESCRIPTION OF THE PREFERRED EMBODIMENTS

Embodiments of the present invention will be described below in detail.

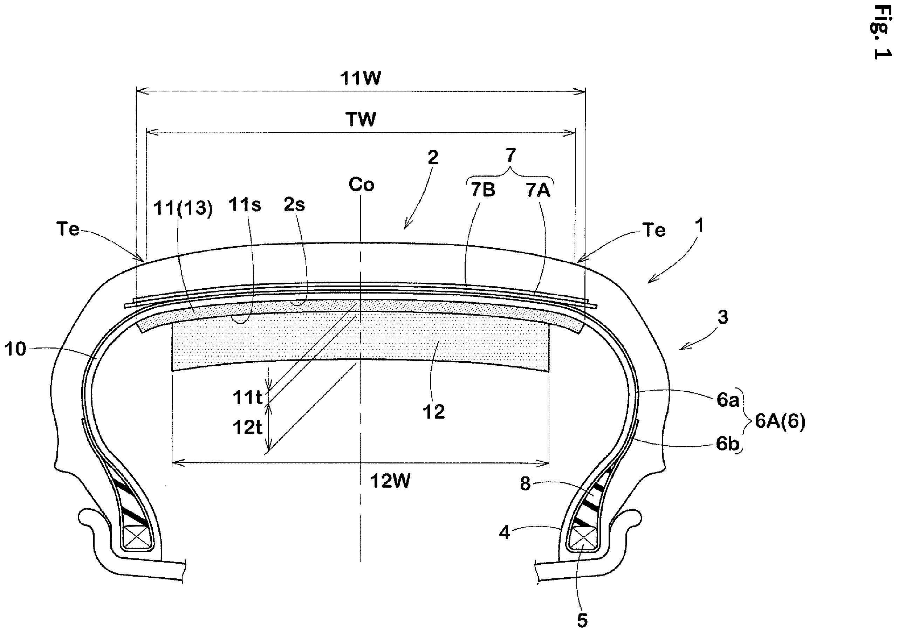

As shown in FIG. 1, a pneumatic tire 1 according to the present embodiment is a tubeless tire, and includes a puncture-preventive sealant layer 11 which is provided on an inner peripheral surface 2s of a tread portion 2, and a sound damper 12 which is provided on an inner peripheral surface 11s of the sealant layer 11.

In this example, the pneumatic tire 1 includes a carcass 6 that extends from the tread portion 2 to bead cores 5 of bead portions 4 through sidewall portions 3, and a belt layer 7 that is located inward of the tread portion 2 and outward of the carcass 6 in the radial direction.

The carcass 6 includes one or more carcass plies 6A having carcass cords aligned with each other. In the present embodiment, the carcass 6 includes one carcass ply 6A. The carcass ply 6A has a body portion 6a extending on and between the bead cores 5, 5, and turn-up portions 6b turned up around the bead cores 5 at both ends of the body portion 6a. A bead apex rubber 8 which reinforces the bead and extends outward from the bead core 5 in the tire radial direction is provided between the body portion 6a and each turn-up portion 6b.

The belt layer 7 includes a plurality of belt plies having belt cords aligned with each other. For example, the belt layer 7 includes two belt plies 7A, 7B. In order to enhance the high speed durability of the tire, a band layer (not shown) including a helically wound band cord can be provided outward of the belt layer 7 in the radial direction.

An inner liner rubber layer 10 is provided inward of the carcass 6. The inner liner rubber layer 10 is made of air-impermeable rubber such as isobutylene-isoprene-rubber, and hermetically maintains the tire internal pressure.

The sealant layer 11 is provided on the inner peripheral surface 2s of the tread portion 2. As a sealant material 13 of the sealant layer 11, those described in Japanese Laid-Open Patent Publication No. 2017-65673 are suitably used. Specifically, the sealant material 13 of the present embodiment contains a rubber component, a liquid polymer, a crosslinking agent, and the like.

As the rubber component, butyl-based rubber such as isobutylene-isoprene-rubber and halogenated isobutylene-isoprene-rubber is used. As the rubber component, the butyl-based rubber is preferably used in conjunction with diene-based rubber.

Examples of the liquid polymer include liquid polybutenes, liquid polyisobutenes, liquid polyisoprenes, liquid polybutadienes, liquid poly-α-olefins, liquid isobutylene, liquid ethylene/α-olefin copolymers, liquid ethylene-propylene copolymers, and liquid ethylenebutylene copolymers. Among them, liquid polybutenes are preferable in terms of adhesiveness or the like.

As the crosslinking agent, known compounds can be used, and organic peroxides are preferable. The use of the butyl-based rubber and the liquid polymer in the organic peroxide crosslinking agent improves adhesiveness, sealing performance, fluidity, and workability.

To the sealant material 13, a crosslinking activator (vulcanization accelerator), an inorganic filler, a plasticizer, or the like can be added as appropriate.

The sealant material 13 which has been produced by preparing and mixing the above-described materials is applied to the inner peripheral surface 2s of the tread portion 2 of a previously vulcanization-molded tire, to form the sealant layer 11. Preferably, as described in Japanese Laid-Open Patent Publication No. 2017-65673, for example, the sealant material 13 is continuously extruded from a twin-screw kneading extruder and helically adhered to the inner peripheral surface 2s of the tread portion 2 of a rotating tire. The tire to which the sealant material 13 has been applied is heated to vulcanize the sealant material 13. Thus, the sealant layer 11 having excellent sealing performance is formed.

A width 11W of the sealant layer 11 in the tire axial direction is not particularly limited. However, the width 11W is preferably 80 to 120% of a tread ground-contact width TW. The lower limit of the width 11W is preferably not less than 85% of the tread ground-contact width TW and more preferably not less than 90% thereof. The upper limit of the width 11W is preferably not greater than 115% of the tread ground-contact width TW and more preferably not greater than 110% thereof.

The tread ground-contact width TW refers to the maximum width, in the tire axial direction, of a ground contact surface which is in contact with the ground when a normal load is applied to a tire mounted on a normal rim and inflated to a normal internal pressure. The "normal rim" represents a rim that is defined, in a standard system including a standard with which the tire complies, by the standard for each tire, and is, for example, the "standard rim" in the JATMA standard, the "Design Rim" in the TRA standard, or the "Measuring Rim" in the ETRTO standard. The "normal internal pressure" represents an air pressure defined by the standard for each tire, and is the "maximum air pressure" in the JATMA standard, the maximum value recited in the table "TIRE LOAD LIMITS AT VARIOUS COLD INFLATION PRESSURES" in the TRA standard, or the "INFLATION PRESSURE" in the ETRTO standard. In the case of a tire for a passenger car, the normal internal pressure is 180 kPa. The "normal load" represents a load defined by the standard for each tire, and is the "maximum load capacity" in the JATMA standard, the maximum value recited in the table "TIRE LOAD LIMITS AT VARIOUS COLD INFLATION PRESSURES" in the TRA standard, or the "LOAD CAPACITY" in the ETRTO standard.

In the description herein, unless otherwise specified, dimensions and the like of the components of the tire are represented by values specified in a state where the tire is inflated to the normal internal pressure and no load is applied to the tire.

A thickness 11t of the sealant layer 11 is preferably not less than 1.0 mm, more preferably not less than 2.0 mm, and even more preferably not less than 3.0 mm. The upper limit of the thickness 11t is preferably not greater than 10.0 mm, more preferably not greater than 8.0 mm, and even more preferably not greater than 5.0 mm. If the thickness 11t is less than 1.0 mm, there are difficulties in assuredly sealing a puncture hole. Conversely, if the thickness 11t is greater than 10.0 mm, the effect of sealing the puncture hole is substantially no longer improved, and the mass of the tire disadvantageously increases.

The sound damper 12 is made of a sponge material and is provided on the inner peripheral surface 11s of the sealant layer 11. The sound damper 12 is adhered to the sealant layer 11 by the adhesiveness of the sealant material 13.

The sound damper 12 extends in the tire circumferential direction. In particular, the sound damper 12 preferably forms an annular shape in which both ends of the sound damper 12 in the tire circumferential direction meet each other. Both the ends of the sound damper 12 in the tire circumferential direction may be spaced apart from each other. In that case, the spaced distance is preferably not greater than 80 mm, more preferably not greater than 70 mm, and even more preferably not greater than 60 mm.

As the sponge material of the sound damper 12, closed cell foam obtained by foaming of rubber or a synthetic resin is used. Examples of the rubber foam include chloroprene rubber sponge, ethylene propylene rubber sponge, and nitrile rubber sponge. Examples of the synthetic resin foam include polyurethane-based sponges (e.g., ether-based polyurethane sponges, ester-based polyurethane sponges, and ether/ester-based polyurethane sponges), and polyethylene-based sponges (e.g., polyethylene sponge).

In order to allow the sponge material to exhibit the sound damping performance, the density of the sponge material is preferably not greater than 60 kg/m³, more preferably not greater than 55 kg/m³, and even more preferably not greater than 50 kg/m³. The lower limit of the density is preferably not less than 10 kg/m³, more preferably not less than 15 kg/m³, and even more preferably not less than 20 kg/m³.

The sound damper 12 has an air permeability of not higher than 20 mL/cm²/s.

The "air permeability" is measured in accordance with the above-described measurement manner. For example, the air permeability of not higher than 20 mL/cm²/s is assumed to correspond to a value of an air leakage (an amount of air leaking through a hole having a diameter of 1 mm) that causes a pressure decrease of 10 to 15 kPa per day in a tire, for a passenger car, inflated with air to 200 kPa.

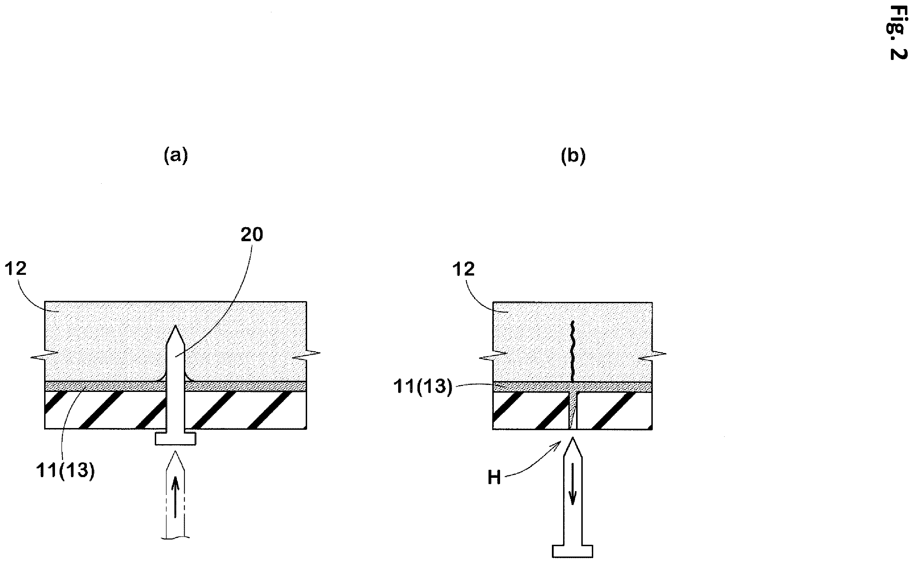

The sound damper 12 having such a configuration has a low air permeability, and has excellent hermetic properties. Therefore, as shown in FIGS. 2(a) and 2(b), for example, even if a puncture hole H is large and the sealant material 13 fails to sufficiently perform puncture sealing, the sound damper 12 itself can seal the puncture hole H to reduce the flowing-out of air. This effect may be referred to as "sound damper's sealing effect".

Furthermore, the sound damper 12 has excellent hermetic properties and thus acts to press the sealant material 13 around the puncture hole H. Therefore, the sealant material 13 can be easily pushed into the puncture hole H, which enhances an effect of the sealant material 13 for sealing the puncture hole H. This effect may be referred to as "sealant material pushing effect". The interaction between the sound damper's sealing effect and the sealant material pushing effect can improve the puncture sealing performance, and enhance puncture sealing success rate.

A thickness 12t of the sound damper 12 is preferably not less than 20 mm. Therefore, a foreign object 20 such as a nail is unlikely to penetrate through the sound damper 12, and the above-described effects can be more assuredly exhibited. A result of market research indicates that most foreign objects sticking into a tire in the market each have a length of not greater than 25 mm. Therefore, in consideration of the tire thickness, if the thickness 12t of the sound damper 12 is not less than 20 mm, the foreign object 20 can be almost assuredly prevented from penetrating through the sound damper 12.

If the air permeability is higher than 20 mL/cm²/s, the sound damper 12 allows air to easily pass, and thus, the sound damper's sealing effect is not sufficiently exhibited. In addition, a sufficient sealant material pushing effect cannot be expected. From this standpoint, the upper limit of the air permeability is preferably not higher than 15 mL/cm²/s, more preferably not higher than 10 mL/cm²/s, and even more preferably not higher than 5 mL/cm²/s. The air permeability does not particularly have a lower limit, i.e., the lower the better.

If the thickness 12t of the sound damper 12 is less than 20 mm, the foreign object 20 such as a nail may penetrate through the sound damper 12, and, for example, air leaks through the generated through hole, whereby the sound damper's sealing effect is not sufficiently exhibited. Therefore, the lower limit of the thickness 12t is preferably not less than 25 mm and more preferably not less than 30 mm. However, if the thickness 12t is excessively great, the mass increases, leading to separation of the sound damper 12 from the sealant layer 11 due to centrifugal force. In addition, when a rim is removed, the workability may be adversely affected. Therefore, the upper limit of the thickness 12t is preferably not greater than 50 mm, more preferably not greater than 45 mm, and even more preferably not greater than 40 mm.

During running, a force is applied to the sound damper 12 in a direction in which the thickness 12t is reduced due to centrifugal force. However, the sound damper 12 formed of a sponge material having a low air permeability is supported by gas in the closed cell foam, and therefore, the reduction of volume is small, resulting in sound damping performance being stably exhibited.

A width 12W of the sound damper 12 in the tire axial direction may be less than, equal to, or greater than the width 11W of the sealant layer 11. In a case where the width 12W is less than the width 11W (12W < 11W), the puncture sealing performance can be exhibited by performance intrinsic to the sealant layer 11 also at a portion where only the sealant layer 11 is present. Also in a case where the width 12W is equal to or greater than the width 11W (12W ≥ 11W), the sound damper's sealing effect and the sealant material pushing effect can be exhibited throughout the entire surface of the sealant layer 11. However, the width 12W is preferably not less than 40% of the width 11W, more preferably not less than 45% thereof, and even more preferably not less than 50% thereof, in terms of balance among sound damping performance, weight, rim mounting workability, and the like. The upper limit of the width 12W is preferably not greater than 100% of the width 11W, more preferably not greater than 95% thereof, and even more preferably not greater than 90% thereof. In a case where the sound damper 12 is applied to a tire having a small width, if the width 12W of the sound damper 12 is excessively small although the width 12W is in the above-described range, the sound damper 12 is likely to fall down. Therefore, the width 12W is also preferably not less than the thickness 12t.

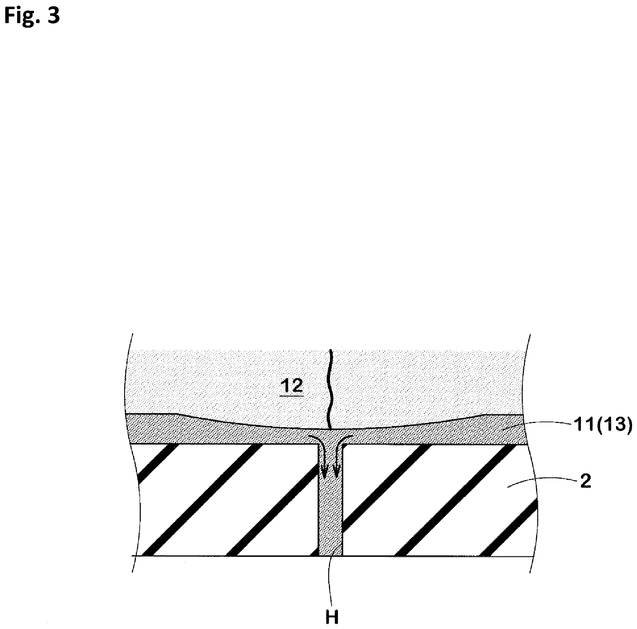

In order to allow the sound damper 12 to further enhance the sealant material pushing effect, the sound damper 12 has a hardness of not higher than 300 N/314 cm². Thus, as exaggerated in FIG. 3, the sound damper 12 is bent to intensively press a portion of the sealant material 13 around the puncture hole H, so that an effectiveness of pushing the sealant material 13 into the puncture hole H and the flow of the sealant material 13 can be enhanced. Meanwhile, if the sound damper 12 has a hardness of higher than 300 N/314 cm² and is hard, the pressing force is dispersed over a wide range, so that there are difficulties in intensively pressing a portion of the sealant material 13 around the puncture hole. From this standpoint, the hardness of the sound damper 12 is preferably not higher than 100 N/314 cm² and more preferably not higher than 80 N/314 cm². However, if the hardness is excessively low, the flow of the sealant material 13 deteriorates. Therefore, the lower limit of the hardness is preferably not less than 10 N/314 cm², more preferably not less than 20 N/314 cm², and even more preferably not less than 30 N/314 cm².

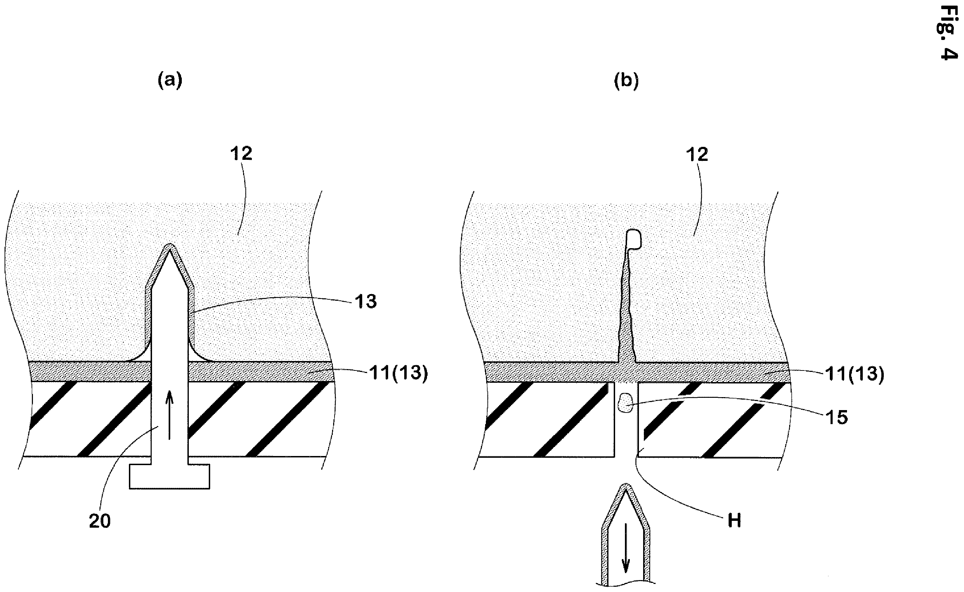

The sound damper 12 also preferably has a tensile strength of not less than 20 kPa. If the tensile strength is less than 20 kPa, when the foreign object 20 sticks into the sound damper 12 as shown in FIG. 4(a), a portion of the sponge material (the sound damper 12) is more likely to be torn off due to the foreign object 20 to which the sealant material 13 adheres. When the foreign object 20 is removed from the tire, a sponge strip 15 having been torn off is left in the puncture hole H as shown in FIG. 4(b), so that puncture sealing by the sealant material 13 tends to be hindered. From this standpoint, the tensile strength of the sound damper 12 is preferably not less than 100 kPa and more preferably not less than 120 kPa. The upper limit of the tensile strength is not particularly limited, i.e., the higher the better.

From the standpoint that the sponge material is prevented from being torn off, it is preferable that the sound damper 12 can easily come off the sealant material. Thus, when a sticking foreign object is pulled out, the sponge material is unlikely to be pulled and torn off, and therefore, puncture sealing is not hindered.

Therefore, adhesion between the sound damper 12 and the sealant material as specified by the following measuring manner is preferably not greater than 5.0 N/cm². In the measuring manner, a rectangular-parallelepiped-shaped test piece having a 30 mm × 30 mm square adhesion surface and a thickness of 10 mm is initially cut out of the sound damper 12, and the adhesion surface of the test piece is adhered to the flat sealant layer 11. A surface opposite to the adhesion surface of the test piece is firmly adhered to a jig. Next, the test piece is pulled perpendicularly relative to the sealant layer 11 by using the jig, and a force is measured when the test piece comes off the sealant layer 11. This force is divided by the area of the adhesion surface of the test piece, to obtain the adhesion. The tensile speed of the jig is 300 mm/min. The adhesion is preferably not greater than 4.5 N/cm² and more preferably not greater than 4.0 N/cm². The lower limit of the adhesion is preferably not less than 0.1 N/cm², more preferably not less than 0.5 N/cm², and even more preferably not less than 1.0 N/cm².

Although the preferred embodiments of the present invention have been described above in detail, the present invention is not limited to the illustrated embodiments, and various modifications can be made to implement the present invention.

### [Examples]

Pneumatic tires (tire size: 215/55R17) which had the basic structure shown in FIG. 1 and to which sound dampers having specifications indicated in Table 1 were adhered were produced as test tires. The puncture sealing success rate (puncture sealing performance) of each test tire was evaluated. Example 5 is not according to the invention.

Ether/ester-based polyurethane sponges (density: 31 kg/m³) were used as the respective sound dampers. The test tires had substantially the same specifications, except for the sound dampers.

### <Puncture Sealing Success Rate>

Fifty nails (nails in JIS N150 each having a diameter of 5.2 mm and a length of 40 mm) were driven into a groove bottom portion in the tire equator of the tread portion of each test tire inflated to an internal pressure (250 kPa) such that the nails were dispersed in the circumferential direction. After the tire was left as it was in an environment having room temperature of 25°C for one hour, the nails were pulled out, soapy water was applied to the puncture holes, and the presence or absence of air leakage was checked. The puncture sealing success rate was obtained and evaluated from the number of puncture holes that did not cause air leakage. The higher the value is, the more excellent puncture sealing performance is.

**[Table 1]**

| | Comp. Ex. 1 | Ex. 1 | Ex. 2 | Ex. 3 | Ex. 4 | Ex. 5 | Ex. 6 | Ex, 7 | Ex. 8 | Ex. 9 | Ex. 10 |
|---|---|---|---|---|---|---|---|---|---|---|---|
| <Sound damper> | Sponge | | | | | | | | | | |
| Air permeability (mL/cm²/s) | 30 | 5 | 20 | 5 | | | | | | | |
| Hardness (N/314 cm²) | 30 | | | 80 | 300 | 400 | 30 | | | | |
| Tensile strength (kPa) | 200 | | | | | | 10 | 20 | 400 | 200 | |
| Thickness 12t (mm) | 40 | | | | | | | | | 10 | 20 |
| Puncture sealing success rate | 43 | 50 | 47 | 48 | 46 | 45 | 45 | 46 | 50 | 47 | 49 |

As indicated in Table 1, it can be confirmed that the products of the examples allowed enhancement of the puncture sealing success rate.

The sealant layer had a thickness of 3.0 mm, and had a sealant material having a composition indicated in Table 2. The chemicals indicated in Table 2 are as follows.
· Isobutylene-isoprene-rubber: IIR065, manufactured by JSR Corporation
· Polybutene: HV-1900, manufactured by JX Nippon Oil & Energy Corporation, the number-average molecular weight: 2900
· Carbon black: N330, manufactured by Cabot Japan K. K.
· Oil: DOS (dioctyl sebacate), manufactured by Taoka Chemical Co., Ltd.
· Crosslinking agent: NYPER-NS (BPO: 40%, DBP: 48%), manufactured by NOF Corporation
· Crosslinking activator: QO (quinone dioxime), manufactured by Ouchi Shinko Chemical Industrial Co., Ltd.

**[Table 2]**

| <Sealant material> | Content (parts by mass) |
|---|---|
| Isobutylene-isoprene-rubber | 100 |
| Polybutene | 200 |
| Carbon black | 15 |
| Oil | 15 |
| Crosslinking agent | 7 |
| Crosslinking activator | 7 |

## Claims

1. A pneumatic tire (1) comprising:
a puncture-preventive sealant layer (11) provided on an inner peripheral surface (2s) of a tread portion (2); and
a sound damper (12) provided on an inner peripheral surface (11s) of the sealant layer (11),
the sound damper (12) including a sponge material having closed cell foam,
**characterised in that**
the sound damper (12) has an air permeability of not higher than 20 mL/cm²/s, and the sound damper (12) has a hardness of not higher than 300 N/314 cm²,
wherein the air permeability is measured by adhering a sample (A) of the sponge material having a width (W) of 60 mm, a depth (L) of 60 mm, and a thickness (T) of 30 mm to a flat plate (B) having a thickness of 10 mm and having a hole (H) with a diameter of 1 mm, corresponding to an opening area of 0.00785 cm², then adhering the sample (A) to the flat plate (B) such that the center of a surface, of the sample (A), having the width (W) × the depth (L) is located at the hole (H), increasing a pressure (P2) on the sponge material sample (A) side to set, as 200 kPa, the pressure difference P2 - P1 between the pressure (P2) and a pressure (P1) on the flat plate (B) side, then measuring a flow rate, in mL per second, of air leaking from the hole (H), and then converting the flow rate to a flow rate per opening area of 1.0 cm², and the obtained flow rate represents the air permeability, in mL/cm²/s, and
wherein the hardness of the sponge material is measured in accordance with Method D for a hardness test specified in Section 6 of JIS-K6400-2.

2. The pneumatic tire (1) according to claim 1, wherein the sound damper (12) has a hardness of not lower than 10 N/314 cm², the hardness of the sponge material being measured in accordance with Method D for a hardness test specified in Section 6 of JIS-K6400-2.

3. The pneumatic tire (1) according to claim 1 or 2, wherein the sound damper (12) has a tensile strength of not less than 20 kPa, the tensile strength of the sponge material being measured in accordance with Section 5, "Tensile Strength and Elongation", of JIS-K6400-5.

4. The pneumatic tire (1) according to any one of claims 1 to 3, wherein the sound damper (12) has a tensile strength of not more than 400 kPa, the tensile strength of the sponge material being measured in accordance with Section 5, "Tensile Strength and Elongation", of JIS-K6400-5.

5. The pneumatic tire (1) according to any one of claims 1 to 4, wherein the sound damper (12) has a thickness (12t) of not less than 20 mm.

6. The pneumatic tire (1) according to any one of claims 1 to 5, wherein the sound damper (12) has a thickness (12t) of not more than 50 mm.

## Patentansprüche

1. Luftreifen (1), umfassend:
eine Einstich-verhindernde Dichtmittelschicht (11), die an einer Innenumfangsoberfläche (2s) eines Laufstreifenabschnitts (2) vorgesehen ist; und
einen Schalldämpfer (12), der an einer Innenumfangsoberfläche (11s) der Dichtmittelschicht (11) vorgesehen ist,
wobei der Schalldämpfer (12) ein Schwamm-Material umfasst, das geschlossenzelligem Schaum aufweist,
**dadurch gekennzeichnet, dass**
der Schalldämpfer (12) eine Luftdurchlässigkeit von nicht höher als 20 mL/cm²/s aufweist, und der Schalldämpfer (12) eine Härte von nicht höher als 300 N/314 cm² aufweist,
wobei die Luftdurchlässigkeit gemessen wird, indem eine Probe (A) des Schwamm-Materials, die eine Breite (W) von 60 mm, eine Tiefe (L) von 60 mm und eine Dicke (T) von 30 mm aufweist, an eine ebene Platte (B) angeheftet wird, die eine Dicke von 10 mm aufweist und ein Loch (H) mit einem Durchmesser von 1 mm aufweist, der einer Öffnungsfläche von 0,00785 cm² entspricht, dann die Probe (A) so an die ebene Platte (B) angeheftet wird, dass das Zentrum einer Oberfläche, der Probe (A), welche die Breite (W) × die Tiefe (L) aufweist, sich bei dem Loch (H) befindet, ein Druck (P2) auf die Seite der Schwamm-Material-Probe (A) erhöht wird, um den Druckunterschied P2 - P1 zwischen dem Druck (P2) und einem Druck (P1) auf der Seite der ebenen Platte (B) auf 200 kPa einzustellen, dann eine Flussrate, in mL pro Sekunde, von aus dem Loch (H) entweichender Luft gemessen wird, und die Flussrate dann in eine Flussrate pro Öffnungsfläche von 1,0 cm² umgerechnet wird, und die erhaltene Flussrate die Luftdurchlässigkeit, in mL/cm²/s, darstellt, und
wobei die Härte des Schwamm-Materials gemäß Verfahren D für eine in Abschnitt 6 von JIS-K6400-2 angegebene Härteprüfung gemessen wird.

2. Luftreifen (1) nach Anspruch 1, wobei der Schalldämpfer (12) eine Härte von nicht niedriger als 10 N/314 cm² aufweist, wobei die Härte des Schwamm-Materials gemäß Verfahren D für eine in Abschnitt 6 von JIS-K6400-2 angegebene Härteprüfung gemessen ist.

3. Luftreifen (1) nach Anspruch 1 oder 2, wobei der Schalldämpfer (12) eine Zugfestigkeit von nicht weniger als 20 kPa aufweist, wobei die Zugfestigkeit des Schwamm-Materials gemäß Abschnitt 5, "Zugfestigkeit und Dehnung", von JIS-K6400-5 gemessen ist.

4. Luftreifen (1) nach einem der Ansprüche 1 bis 3, wobei der Schalldämpfer (12) eine Zugfestigkeit von nicht mehr als 400 kPa aufweist, wobei die Zugfestigkeit des Schwamm-Materials gemäß Abschnitt 5, "Zugfestigkeit und Dehnung", von JIS-K6400-5 gemessen ist.

5. Luftreifen (1) nach einem der Ansprüche 1 bis 4, wobei der Schalldämpfer (12) eine Dicke (12t) von nicht weniger als 20 mm aufweist.

6. Luftreifen (1) nach einem der Ansprüche 1 bis 5, wobei der Schalldämpfer (12) eine Dicke (12t) von nicht mehr als 50 mm aufweist.

## Revendications

1. Bandage pneumatique (1) comprenant :
une couche d'étanchéité anti-crevaison (11) prévue sur une surface périphérique intérieure (2s) d'une portion formant bande de roulement (2) ; et
un amortisseur sonore (12) prévu sur une surface périphérique intérieure (11s) de la couche d'étanchéité (11),
l'amortisseur sonore (12) incluant un matériau spongieux ayant une mousse à cellules fermées,
**caractérisé en ce que**
l'amortisseur sonore (12) à une perméabilité à l'air qui n'est pas supérieure à 20 ml/cm²/s, et l'amortisseur sonore (12) a une dureté qui n'est pas supérieure à 300 N/314 cm²,
dans lequel la perméabilité à l'air est mesurée en faisant adhérer un échantillon (A) du matériau spongieux, ayant une largeur (W) de 60 mm, une profondeur (L) de 60 mm, et une épaisseur (T) 30 mm, à une plaque plate (B) ayant une épaisseur de 10 mm, et ayant un trou (H) avec un diamètre de 1 mm, correspondant à une aire d'ouverture de 0,00785 cm², puis en faisant adhérer l'échantillon (A) à la plaque plate (B) de telle sorte que le centre d'une surface de l'échantillon (A), ayant la largeur (W) × la profondeur (L), est situé au niveau du trou (H), en augmentant une pression (P2) sur le côté de l'échantillon de matériau spongieux (A) pour définir, en tant que 200 kPa, la différence de pression P2 - P1 entre la pression (P2) et une pression (P1) sur le côté de la plaque plate (B), puis en mesurant un débit, en ml par seconde, d'air s'évacuant hors du trou (H), et puis en convertissant le débit en un débit par aire d'ouverture de 1,0 cm², et le débit obtenu représente la perméabilité à l'air, en ml/cm²/s, et
dans lequel la dureté du matériau spongieux est mesurée selon le procédé D d'un essai de dureté spécifié dans la section 6 de la norme industrielle japonaise JIS-K6400-2.

2. Bandage pneumatique (1) selon la revendication 1, dans lequel l'amortisseur sonore (12) a une dureté qui n'est pas inférieure à 10 N/314 cm², la dureté du matériau spongieux étant mesurée selon le procédé D d'un essai de dureté spécifié dans la section 6 de la norme industrielle japonaise JIS-K6400-2.

3. Bandage pneumatique (1) selon la revendication 1 ou 2, dans lequel l'amortisseur sonore (12) a une résistance à la traction qui n'est pas inférieure à 20 kPa, la résistance à la traction du matériau spongieux étant mesurée selon la section 5, « Tensile Strength and Elongation » (résistance à la traction et allongement), de la norme industrielle japonaise JIS-K6400-5.

4. Bandage pneumatique (1) selon l'une quelconque des revendications 1 à 3, dans lequel l'amortisseur sonore (12) a une résistance à la traction qui n'est pas supérieure à 400 kPa, la résistance à la traction du matériau spongieux étant mesurée selon la section 5, « Tensile Strength and Elongation » (résistance à la traction et allongement), de la norme industrielle japonaise JIS-K6400-5.

5. Bandage pneumatique (1) selon l'une quelconque des revendications 1 à 4, dans lequel l'amortisseur sonore (12) a une épaisseur (12t) qui n'est pas inférieure à 20 mm.

6. Bandage pneumatique (1) selon l'une quelconque des revendications 1 à 5, dans lequel l'amortisseur sonore (12) a une épaisseur (12t) qui n'est pas supérieure à 50 mm.
